(19) Europäisches Patentamt
European Patent Office
Office européen des brevets

(11) **EP 3 480 631 B1**

(12) **EUROPEAN PATENT SPECIFICATION**

(45) Date of publication and mention
of the grant of the patent:
**25.06.2025 Bulletin 2025/26**

(21) Application number: **17820178.6**

(22) Date of filing: **28.06.2017**

(51) International Patent Classification (IPC):
**G02B 5/128** *(2006.01)*   **A41D 1/00** *(2018.01)*
**A41D 13/01** *(2006.01)*   **B32B 7/02** *(2019.01)*
**B32B 27/20** *(2006.01)*

(52) Cooperative Patent Classification (CPC):
**G02B 5/128; A41D 1/00; A41D 13/01; B32B 27/20**

(86) International application number:
**PCT/JP2017/023660**

(87) International publication number:
**WO 2018/003824 (04.01.2018 Gazette 2018/01)**

(54) **RETROREFLECTIVE TAPE**

RETROREFLEKTIERENDES BAND

BANDE RÉTRORÉFLÉCHISSANTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.06.2016   JP 2016130583**

(43) Date of publication of application:
**08.05.2019 Bulletin 2019/19**

(73) Proprietor: **Unitika Sparklite Ltd.
Nantan-shi, Kyoto 629-0311 (JP)**

(72) Inventors:
• **NISHIMURA, Yasutaka
Nantan-shi
Kyoto 629-0311 (JP)**

• **FUJIKI, Motomu
Nantan-shi
Kyoto 629-0311 (JP)**
• **NISHIGAKI, Atsumi
Kyoto-shi
Kyoto 612-8422 (JP)**

(74) Representative: **Müller-Boré & Partner
Patentanwälte PartG mbB
Friedenheimer Brücke 21
80639 München (DE)**

(56) References cited:
**EP-A1- 3 125 004        WO-A2-2015/195433
JP-A- 2004 252 116       JP-A- 2005 534 979
JP-A- 2015 191 144       JP-A- 2015 191 144
US-A1- 2006 019 068**

**Description**

TECHNICAL FIELD

The present invention relates to a retroreflective tape having excellent flexibility, retroreflective performance, and washing durability and capable of clearly forming a boundary between a retroreflective region and a non-retroreflective region.

BACKGROUND ART

Conventionally, retroreflective materials that retroreflect incident light are widely used for indications such as traffic signs, or for identification of marine accident equipment, and particularly for enhancing visibility during the nighttime. From the viewpoint of ensuring the safety of people who work at night, such retroreflective materials are also widely used as safety clothing for policemen, firefighters, workers involved in civil engineering and construction, and the like, in safety clothes, safety vests, sashes, arm bands, life vests, and the like. Further, in recent years, along with a growing consciousness of the safety of life, or the diversification of decorativeness, such retroreflective materials are also used in apparel such as windbreakers, sweat suits, T-shirts, sports shoes, and swimming suits as measures for preventing traffic accidents during the nighttime, or used in bags, suitcases, and the like for decorative purposes. Among retroreflective materials, a retroreflective tape is known as a member that is easily attached to a product to which retroreflective performance is desired to be imparted.

For example, Patent Document 1 discloses a retroreflective tape roll formed by winding a retroreflective tape into a roll. The retroreflective tape includes a retroreflective layer having a light transmitting surface and a reflecting surface opposite to the light transmitting surface, a support layer having a support surface adjacent to the reflecting surface and supporting the retroreflective layer, a pressure-sensitive adhesive layer provided on the support layer, and a release treatment layer provided on the light transmitting surface of the retroreflective layer. Patent Document 1 discloses a retroreflective tape roll product in which the release treatment layer of an inner winding portion of the retroreflective tape and the pressure-sensitive adhesive layer of an outer winding portion following the inner winding portion are in contact with each other. According to the retroreflective tape roll product, it is said that the retroreflective tape delivered from the retroreflective tape roll is continuously drawn out from a dispenser, and the retroreflective tape can be easily and quickly secured to a surface of a desired object by the pressure-sensitive adhesive layer of the retroreflective tape itself. Further, it is said that since the retroreflective tape roll product is formed such that the release treatment layer of the inner winding portion of the rolled retroreflective tape and the pressure-sensitive adhesive layer of the outer winding portion are in contact with each other, a release liner to be attached to the pressure-sensitive adhesive layer can be removed, and, in addition, the retroreflective tape can be easily rewound from the retroreflective tape roll formed without using the release liner.

Patent Document 2 discloses a tape provided with a retroreflective layer on its surface and further discloses a retroreflective tape with a pattern, in which the retroreflective layer has a concavoconvex surface, and a continuous pattern of a color different from that of the retroreflective layer is formed in a concave on the concavoconvex surface. According to the retroreflective tape, the retroreflective layer having a large area has the concavoconvex surface, and the retroreflective layer is partially thin or does not exist at a continuous concave portion, whereby the tape is more likely to be bent at the concave portion and holds flexibility. For this reason, it is said that even if the retroreflective layer itself is structurally lacking in flexibility and is a material less likely to be bent, when the retroreflective tape is sewn onto a flexible cloth such as a knit material, the retroreflective tape does not impair flexibility of clothes. Further, in the retroreflective tape disclosed in Patent Document 2, by forming a region (non-retroreflective region) where the retroreflective layer is not provided, a region (retroreflective region) where the retroreflective layer is provided can form a pattern, and there is an advantage that the pattern can be displayed by a night node color visually recognized by retroreflective reflected light.

PRIOR ART DOCUMENTS

PATENT DOCUMENTS

Patent Document 1: WO 2013/014727
Patent Document 2: Japanese Utility Model Registration No. 3093638
Patent Document 3: JP2015 191144 SUMMARY OF THE INVENTION

PROBLEMS TO BE SOLVED BY THE INVENTION

Patent Document 1 discloses a configuration in which microspheres are provided on the entire surface of a retroreflective tape. However, in such a configuration, there is a disadvantage that the flexibility of the tape itself is inferior. Accordingly, when the retroreflective tape is attached to a flexible and bendable product such as clothes, there is a problem in that it becomes difficult to attach the retroreflective tape, when clothes to which the retroreflective tape is attached are worn, the retroreflective tape is difficult to follow the movement of the wearer, and the wearer feels discomfort.

On the other hand, according to the retroreflective tape disclosed in Patent Document 2, the retroreflective layer having a large area has a concavoconvex surface, and the retroreflective layer is partially thin or does not exist at a continuous concave portion, whereby the tape is more likely to be bent at the concave portion and has flexibility. However, the retroreflective tape has a problem that retroreflective reflection does not occur sufficiently and the retroreflective performance is inferior. Further, in the retroreflective tape disclosed in Patent Document 2, although a night mode color pattern visually recognized by retroreflective reflected light can be formed by arranging the retroreflective layer region and the non-retroreflective layer into various shapes, there is a disadvantage that it is difficult for the boundary between the both regions to become clear. That is, in the retroreflective tape disclosed in Patent Document 2, there is a disadvantage that at the time of production, chipping or peeling tends to occur at an edge of the retroreflective layer at the boundary between the retroreflective layer region and the non-retroreflective layer, the boundary between the both regions does not become clear as designed, and the night mode color pattern visually recognized by retroreflective reflected light tends to become unclear. Furthermore, the retroreflective tape disclosed in Patent Document 2 is sometimes inferior in washing durability, and there is also a disadvantage that the retroreflective performance tends to deteriorate when washing is repeated.

It is an object of the present invention to solve the above-mentioned problems of the prior art and to provide a retroreflective tape having excellent flexibility, retroreflective performance, and washing durability and capable of clearly forming a boundary between a retroreflective region and a non-retroreflective region.

MEANS FOR SOLVING THE PROBLEM

In order to solve the above-mentioned problems, the present inventors have conceived a retroreflective tape in which a retroreflective region including a fixing resin layer, transparent microspheres embedded in the fixing resin layer, and a reflective layer formed of a metal film provided between the transparent microspheres and the fixing resin layer is partially provided on a base, so that the non-retroreflective region without the retroreflective region is formed. That is, the present inventors thought that in the tape disclosed in Patent Document 2, although the reflective layer which retroreflects light was formed of a methacrylic synthetic resin having transparency and containing specular pigment, a portion of light advancing from the glass bead side was scattered and transmitted in the synthetic resin, and the retroreflective performance was inferior. On the other hand, in the case of the above configuration, since the reflective layer is a metal film, it is considered that excellent retroreflective performance can be obtained as compared with the tape disclosed in Patent Document 2. In the retroreflective tape, it has been conceived that the retroreflective region is partially provided, and the non-retroreflective region is formed, so that flexibility can be imparted to the retroreflective tape to be obtained.

In the retroreflective tape disclosed in Patent Document 2, since a reflective resin is used as the reflective layer, when the retroreflective tape is produced, after a reflective resin layer is provided, the glass beads can be scattered. On the other hand, when a metal film is used as the reflective layer, the glass beads cannot be scattered after the metal film is formed. Accordingly, as a method of producing a retroreflective tape which has a configuration conceived by the present inventors, for example, a method including the following steps 1 to 6 was considered:

step 1: heating a release base in which a thermoplastic film is stacked on a base film at a temperature not less than the softening point of the thermoplastic film to soften the thermoplastic film;
step 2: prior to, simultaneously with, or subsequent to step 1, dispersing transparent microspheres over the thermoplastic film of the release base, and cooling the resulting material to cure the thermoplastic film at the time when the transparent microspheres has been embedded in the softened thermoplastic film, to obtain a release base in which the transparent microspheres are embedded;
step 3: optionally providing a transparent resin layer on the transparent microsphere side;
step 4: stacking a reflective layer formed of a metal film on the surface with the transparent microspheres of the release base in which the transparent microspheres are embedded, or on the transparent resin layer;
step 5: stacking a fixing resin layer on the reflective layer by applying a resin forming the fixing resin layer; and
step 6: bonding the fixing resin layer and a support after peeling off the release base or peeling off the release base after bonding the fixing resin layer and the support.

In order to form the non-retroreflective region without the retroreflective region, for example, there is mentioned, for example, a method in which between the step 5 and the step 6 or after the step 6, partial cutting from the fixing resin layer side to an interface on the side where the transparent microspheres of the thermoplastic film are embedded is performed using a plotter cutter or the like, and the fixing resin layer, the reflective layer and the transparent microspheres are integrally peeled off.

However, even in the retroreflective tape obtained by such a method, the boundary between the retroreflective region and the non-retroreflective region may not be clear as designed in some cases. As a result of intensive study on the above reason by the present inventors, the following was found out. That is, as described above, in the method of producing the reflective tape having the above-described configuration, the fixing resin layer, the reflective layer, and the transparent microspheres are required to be integrally peeled off in order to form the non-retroreflective region. However, it has been found that at the time of the peeling, a portion of the retroreflective region which should be originally maintained is peeled off together with a portion to be peeled off to form the non-retroreflective region, and the boundary between the retroreflective region and the non-retroreflective region becomes blurred. It has found that as a mechanism of action where a portion of the retroreflective region which should be originally maintained is peeled off, when cutting is performed from the fixing resin layer side by using a plotter cutter or the like as described above, the release base and the transparent microspheres are peeled off in a portion of a portion to be the retroreflective region due to the pressure of a blade of the cutter, and the anchor effect on the release base according to the transparent microspheres disappears, so that the transparent microspheres, the reflective layer and the fixing resin layer are partially peeled off.

Thus, the retroreflective tape in which the non-retroreflective region without the retroreflective region is formed by partially providing the retroreflective region having the fixing resin layer, the transparent microspheres, and the reflective layer confronted with a new problem that excellent retroreflective performance cannot be provided.

In order to clarify the boundary between the retroreflective region and the non-retroreflective region as designed in the retroreflective tape having the above configuration, the present inventors have considered that the anchor effect on the release base according to the transparent microspheres is required to be enhanced in a region to be the retroreflective region. Thus, as a result of further intensive studies, the present inventors have found that in a step of embedding the transparent microspheres in the fixing resin layer such that an exposure ratio of the transparent microspheres is in the range of 53 to 70% to partially cut from the fixing resin layer side in order to form the non-retroreflective region, peeling off of the release base and the transparent microspheres hardly occurs in a portion to be the retroreflective region, and a retroreflective tape which has both excellent flexibility and retroreflective performance, achieves clarity of the boundary between the retroreflective region and non-retroreflective region, and has excellent washing durability is obtained. The present invention was completed as a result of further research conducted based on this finding.

In summary, the present invention provides embodiments of the retroreflective tape as defined in the appended claims.

ADVANTAGES OF THE INVENTION

In the retroreflective tape of the present invention, the non-retroreflective region without the retroreflective region is formed by partially providing the retroreflective region having the fixing resin layer, the transparent microspheres, and the reflective layer, so that excellent flexibility can be provided. Further, in the retroreflective tape of the present invention, since the transparent microspheres are embedded in the fixing resin layer with an exposure ratio of 53 to 70%, the retroreflective region is formed in a state of being stably held, so that excellent retroreflective performance can be provided. Furthermore, in the retroreflective tape of the present invention, since the boundary between the retroreflective region and the non-retroreflective region can be clearly formed as designed, it is possible to clearly display a night mode color pattern visually recognized by retroreflective reflected light. In addition, the retroreflective tape of the present invention is excellent also in washing durability and can maintain retroreflective performance even when repeatedly washed, so that the retroreflective tape can be used for a long period of time by being attached to a cloth or the like.

According to the retroreflective tape of the present invention, for example, even when the retroreflective tape is attached to safety clothing for policemen, firefighters, workers involved in civil engineering and construction, and the like or sportswear for people performing running or walking at night, the retroreflective tape is easily attached thereto and hardly gives the wearer an uncomfortable feeling, and, in addition, high retroreflective performance can be obtained.

BRIEF DESCRIPTION OF THE DRAWINGS

Fig. 1 is a schematic diagram of a cross-sectional structure of a retroreflective tape of the present invention.
Fig. 2 is an example of a pattern formed by arrangement of a retroreflective region and a non-retroreflective region in the retroreflective tape of the present invention.
Fig. 3 is an example of the pattern formed by arrangement of the retroreflective region and the non-retroreflective region in the retroreflective tape of the present invention.

EMBODIMENTS OF THE INVENTION

A retroreflective tape of the present invention has a retroreflective region partially provided on a base and a non-retroreflective region without the retroreflective region. In this retroreflective tape, the retroreflective region includes a fixing resin layer, a reflective layer, and transparent microspheres stacked in order, and the transparent microspheres have a specific refractive index and are embedded in the fixing resin layer with a specific exposure ratio. Hereinafter, the structure and constituent materials of the retroreflective material of the present invention will be described.

In this document, in the retroreflective tape, the side on which light is incident may be sometimes referred to as "incident light side", and the side opposite to the side on which light is incident may be sometimes referred to as "non-incident light side".

Layer Structure

The retroreflective tape of the present invention has a retroreflective region 2 and a non-retroreflective region 3 on a base layer 1.

In the retroreflective tape of the present invention, the base layer 1 is a base material used for forming a tape shape and is included in both the retroreflective region 2 and the non-retroreflective region 3. As the base layer 1, there may be provided at least one of a support base 11 provided on the side of a fixing resin layer 21 where transparent microspheres 23 are not embedded and a release base 12 provided on the incident light side of the transparent microspheres 23. When the support base 11 is provided as the base layer 1, the support base 11 is adhered to the non-incident light side of the fixing resin layer 21 and plays a role of holding the fixing resin layer 21 without being peeled off even during use. When the release base 12 is provided as the base layer 1, the release base 12 is provided on the incident light side of the transparent microspheres 23 and is peeled off during use.

In the retroreflective tape of the present invention, the retroreflective region 2 is partially provided on the base layer 1. In the retroreflective region 2, the fixing resin layer 21, a reflective layer 22, and the transparent microspheres 23 are stacked in order, and the transparent microspheres 23 are embedded in the fixing resin layer 21. Further, in the retroreflective region 2, a transparent resin layer 24 may optionally be provided between the reflective layer 22 and the transparent microspheres 23.

In the retroreflective tape of the present invention, a region where the retroreflective region 2 is not provided corresponds to the non-retroreflective region 3 which does not exhibit retroreflective performance. The non-retroreflective region 3 may be a void portion with no other constituents than the base layer 1, or may include a material that does not exhibit retroreflective performance in addition to the base layer 1.

The retroreflective tape of the present invention may optionally be provided with an adhesive layer 4 on a surface on the non-incident light side, in order to provide adhesiveness to an adherend. When the support base 11 is not provided, the adhesive layer 4 may be provided on a surface of the fixing resin layer 21. When the support base 11 is provided, the adhesive layer 4 may be provided on a surface of the support base 11.

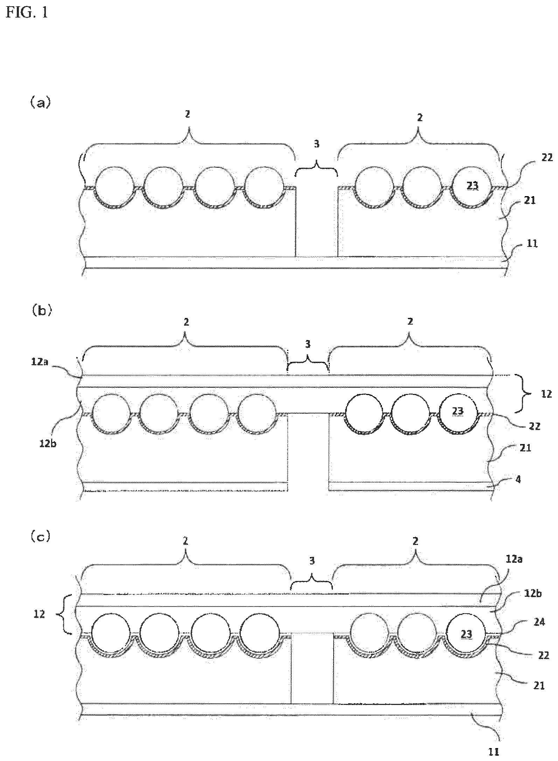

Fig. 1 is a schematic diagram of a cross-sectional structure of the retroreflective tape of the present invention. The cross-sectional structures shown in Figs. 1(A) to 1(C) are merely schematic diagrams, and the size and thickness of each member and layer, an area ratio of the retroreflective region 2 and the non-retroreflective region 3 and the like may differ from the preferred ranges.

In the retroreflective tape shown in Fig. 1(a), the support base 11 is used as the base layer 1, and in the retroreflective region 2, the fixing resin layer 21, the reflective layer 22, and the transparent microspheres 23 are provided in this order from the support base 11 side. The non-retroreflective region 3 is a void portion.

In the retroreflective tape shown in Fig. 1(b), the release base 12 (a laminate of a polyethylene terephthalate film 12a and a polyethylene film 12b) is used as the base layer 1, and in the retroreflective region 2, the transparent microspheres 23, the reflective layer 22, and the fixing resin layer 21 are provided in this order from the release base 12 side. The non-retroreflective region 3 is a void portion, and the adhesive layer 4 is further provided on the non-incident light side of the fixing resin layer 21.

In the retroreflective tape shown in Fig. 1(C), the support base 11 and the release base 12 (a laminate of the polyethylene terephthalate film 12a and the polyethylene film 12b) are used as the base layers 1, and in the retroreflective region 2, the fixing resin layer 21, the reflective layer 22, the transparent resin layer 24, and the transparent microspheres 23 are provided in this order from the support base 11 side toward the release base 12. In the non-retroreflective region 3, a void portion is formed between the support base 11 and the release base 12.

Base Layer

In the retroreflective tape of the present invention, the base layer supports the retroreflective region and serves as the base material of the tape. The base layer may be a support base provided on the non-incident light side of the fixing resin layer or may be a release base provided on the incident light side of the transparent microspheres. The support base is adhered to the fixing resin layer and plays a role of holding the fixing resin layer without being peeled off even during use. On the other hand, the release base is a base material provided on the incident light side of the transparent microspheres to hold the retroreflective region and peeled off during use. In the retroreflective tape of the present invention, although one of the support base and the release base may be provided as the base layer, both of them may be provided.

The support base may be directly stacked on the fixing resin layer, or may be stacked on the fixing resin layer with an adhesive layer formed of an adhesive therebetween.

The support base may be designed as appropriate in light of the use, required strength and flexibility, and the like of the retroreflective material. Examples of materials of the support base include natural fibers such as pulp; resins such as polyesters, for example, polyethylene terephthalate and polyethylene naphthalate; and metals. While the shape of the support base is not limited, the support base may be in the form of a sheet such as a woven knit, a nonwoven fabric, a film, or paper.

While the structure of the release base is not limited as long as it is removable with respect to the transparent microsphere side of the retroreflective region, examples of the structure include a laminate including a thermoplastic film stacked on a base film. When such a laminate is used as the release base, the thermoplastic film side is disposed on the incident light side of the transparent microsphere, and this results in a state where the thermoplastic film embeds a region where the transparent microspheres are exposed from the fixing resin layer to hold the retroreflective region.

While the base film constituting the release base is not limited as long as it can stably retain its shape at the softening temperature of the thermoplastic film to be stacked, examples of the base film include polyester films such as polyethylene terephthalate and polyethylene naphthalate. As the thermoplastic film constituting the release base, a resin film that softens at low temperature is preferred. Examples of such resin films include polyolefin resin films such as polyethylene and polypropylene. The thickness of the thermoplastic film may be set depending on the average particle size of the transparent microspheres.

The thickness of the base layer varies depending upon the support base or the release base. For example, in the case of the support base, the thickness is 30 to 800 $\mu$m, preferably 50 to 500 $\mu$m. For example, in the case of the release base, the thickness is 25 to 250 $\mu$m, preferably 50 to 200 $\mu$m.

Retroreflective Region

In the present invention, the retroreflective region is constituted of the fixing resin layer, the transparent microspheres embedded in the fixing resin layer, and a reflective layer formed of a metal film provided between the transparent microspheres and the fixing resin layer.

[Fixing Resin Layer]

The fixing resin layer serves to hold the transparent microspheres embedded therein.

The resin forming the fixing resin layer is not limited as long as it can hold the transparent microspheres embedded therein, and may be designed as appropriate in consideration of flexibility and the like required in the retroreflective material. Specific examples of the resin forming the fixing resin layer include polyolefin resins (polyethylene, polypropylene, etc.), ethylene-vinyl acetate copolymer resins, polyvinyl alcohols, acrylic resins, urethane resins, and ester resins. Among the above, urethane resins may be preferred from the viewpoint of imparting excellent flexibility.

The resin forming the fixing resin layer may optionally be copolymerized with a silane coupling agent. Through this copolymerization with a silane coupling agent, the fixing resin layer can have durability, adhesiveness, and the like. Further, the resin forming the fixing resin layer may optionally be cross-linked with a cross-linking agent such as a polyisocyanate cross-linking agent, an epoxy cross-linking agent, or a melamine resin. Through this cross-linking with a cross-linking agent, the fixing resin layer can have heat resistance, wash resistance, and the like.

The fixing resin layer may also contain additives such as dyes, pigments, phosphorescent pigments, and inorganic fillers, depending on the use, required function, and the like of the retroreflective material.

While the thickness of the fixing resin layer is not limited as long as it can hold the transparent microspheres embedded therein, the thickness may be 15 to 300 $\mu$m, for example, and preferably 20 to 200 $\mu$m.

[Reflective Layer]

The reflective layer, which is provided between the transparent microspheres and the fixing resin layer, serves to retroreflect light incident from the transparent microspheres.

The reflective layer is formed of a metal film. Specific examples of metals forming the metal film include aluminum, titanium, zinc, silica, tin, nickel, and silver. Among these metals, aluminum may be preferred from the viewpoint of imparting further improved retroreflective performance.

While the thickness of the reflective layer is not limited, it is 100 to 2000 Å, for example, and preferably 600 to 1000 Å.

[Transparent Resin Layer]

The transparent resin layer is a layer optionally provided between the transparent microspheres and the reflective layer in a retroreflective region. That is, the transparent resin layer may or may not be provided in the retroreflective material of the present invention. With the transparent resin layer, the reflective luminance can be adjusted, or the color tone of emitted light can be changed The provision of the transparent resin layer can more hardly cause corrosion of the reflective layer.

While the resin forming the transparent resin layer is not limited as long as it has optical transparency, examples of the resin forming the transparent resin layer include acrylic resins, polyurethane resins, and polyester resins. The resin forming the transparent resin layer may optionally be copolymerized with a silane coupling agent, for the purpose of imparting durability, adhesiveness, and the like to the transparent resin layer. Further, the resin forming the transparent resin layer may optionally be cross-linked with a cross-linking agent such as a polyisocyanate cross-linking agent, an epoxy cross-linking agent, or a melamine resin, for the purpose of imparting heat resistance, wash resistance, and the like to the transparent resin layer.

The transparent resin layer may also contain additives such as ultraviolet absorbents, antioxidants, dyes, pigments, phosphorescent pigments, and inorganic fillers, depending on the use, required function, and the like of the retroreflective material.

Further, the transparent resin layer may optionally be provided with a decoration such as a pattern or letters on a surface thereof not in contact with the transparent microspheres (i.e., the surface exposed in the air).

While the thickness of the transparent resin layer may be set as appropriate in light of the required reflective luminance, color tone, and the like, the thickness may be 0.1 to 30 μm, for example, and preferably 0.1 to 1.0 μm.

[Transparent Microspheres]

The transparent microspheres, which are embedded in the fixing resin layer with the reflective layer therebetween, serve to pass incident light and emitted light retroreflected at the above-described reflective layer. Where the transparent resin layer is not provided, the transparent microspheres are embedded in contact with a surface of the reflective layer (see Fig. 1(a)). Where the transparent resin layer is provided, the transparent microspheres are embedded in contact with a surface of the transparent resin layer (see Fig. 1(c)).

In the present invention, transparent microspheres with a refractive index of 1.6 to 2.5 are used. Use of the transparent microspheres with such a refractive index leads to excellent retroreflective performance with the reflective layer brought into focus. From the viewpoint of imparting further improved retroreflective performance, the refractive index of the transparent microspheres is preferably 1.8 to 2.2, and more preferably 1.9 to 2.1.

The transparent microspheres are embedded and arranged in the fixing resin layer so as to be exposed in air with an exposure ratio of 53 to 70%. By arranging the transparent microspheres with such an exposure ratio, when the fixing resin layer, the transparent microspheres, and the reflective layer are partially peeled off in forming the non-retroreflective region, it is possible to suppress peeling of a region to be left as the retroreflective region, to stably form the retroreflective region in the retroreflective tape, and to clarify the boundary between the retroreflective region and the non-retroreflective region. Furthermore, by arranging the transparent microspheres with such an exposure ratio, it is also possible to suppress separation of the transparent microspheres during use and washing.

From the viewpoint of more effectively achieving clear formation of the boundary between the retroreflective region and the non-retroreflective region, washing durability, and suppression of separation of the transparent microspheres during use, the exposure ratio of the transparent microspheres is preferably 56 to 66%, more preferably 57 to 64%. As used herein, the exposure ratio of the transparent microspheres refers to the ratio (%) of the height of the region where the transparent microspheres are exposed, with respect to the diameter of the transparent microspheres, and represents a value calculated in accordance with the following equation:

$$\text{Exposure ratio (\%) of the transparent microspheres} = (X/R) \times 100,$$

where:

R: R represents the diameter of the transparent microspheres; and
X: X represents the height from the top part of the surface of the reflective layer to the top part of the surfaces of the transparent microspheres exposed in the air, or represents, where the transparent resin layer is provided, the height from the top part of the surface of the reflective layer on the transparent resin layer to the top part of the surfaces of the transparent microspheres exposed in the air.

The exposure ratio herein represents a value calculated as an average of values obtained by measuring the respective exposure ratios of 30 or more transparent microspheres embedded in the retroreflective material.

Although the average particle size of the transparent microspheres is not particularly limited, from the viewpoint of further improving retroreflective performance, the average particle size of the transparent microspheres is generally 30 to 200 $\mu$m, preferably 40 to 120 $\mu$m, more preferably 50 to 100 $\mu$m, and particularly preferably 75 to 90 $\mu$m. The average particle size of the transparent microspheres herein represents a value obtained by measuring the maximum diameter of each transparent microsphere for 30 transparent microspheres, using a microscope set at 500 times magnification, and by calculating an average of the obtained values.

The material of the transparent microspheres is not limited as long as it may have the above-described refractive index, and may be any of a glass, a resin, and the like; however, glass transparent microspheres are suitably used in the present invention because they are excellent in transparency, chemical resistance, wash resistance, weather resistance, and the like.

In the retroreflective region, the number of transparent microspheres embedded per unit area may be set as appropriate depending on the intended retroreflective performance. For example, the number of transparent microspheres per 1 mm$^2$ of the retroreflective region is 50 to 500, preferably 100 to 250, and more preferably 150 to 180. In particular, when the number of transparent microspheres that are exposed with an exposure ratio of 53 to 70% falls within the above-defined range, flexibility, retroreflective performance, and clear formation of the boundary between the retroreflective region and the non-retroreflective region can be achieved more effectively.

Non-Retroreflective Region

In the retroreflective tape of the present invention, the non-retroreflective region is a region not provided with the retroreflective region and having no retroreflective performance.

As shown in Fig. 1, it is preferable that in the non-retroreflective region, there be no member constituting the retroreflective region, and the non-retroreflective region be a void portion. However, as long as the flexibility of the retroreflective tape of the present invention is not impaired, a portion or the entirety of the non-retroreflective region may include materials (such as a resin forming the fixing resin layer or other resins) that do not exhibit retroreflective performance.

Arrangement of Retroreflective Region and Non-Retroreflective Region

In the retroreflective tape of the present invention, although the arrangement of the retroreflective region and the non-retroreflective region is not particularly limited, it is preferable that the retroreflective region be in communication in the longitudinal direction and/or the width direction of the retroreflective tape, and the retroreflective region is partitioned into a plurality of regions by the non-retroreflective region. As described above, by communicating the non-retroreflective region in the longitudinal direction and/or the width direction, when the fixing resin layer, the transparent microspheres, and the reflective layer are partially peeled off in forming the non-retroreflective region, it is possible to suppress peeling of a region to be left as the retroreflective region and to more stably form the retroreflective region in the retroreflective tape. In addition, by partitioning the retroreflective region into a plurality of regions, a design pattern can be formed, and the design of the retroreflective tape can be further improved while providing excellent retroreflective performance. The non-retroreflective region which is in communication in the longitudinal direction and/or the width direction is not necessarily linear and may have a polygonal line shape or have a shape with a curved line.

The non-retroreflective region does not include a linear region extending parallel to the width direction of the retroreflective tape. By disposing the non-retroreflective region in this manner, when the fixing resin layer, the transparent microspheres, and the reflective layer are partially peeled off in the longitudinal direction in forming the non-retroreflective region, it is possible to more clearly form the boundary between the retroreflective region and the non-retroreflective region, and it is possible to more effectively provide flexibility, retroreflective performance, and clarity of the boundary.

The non-retroreflective region includes a plurality of linear regions extending in two or more (preferably three or more, more preferably four or more) different directions. By disposing the non-retroreflective region in this manner, when the retroreflective tape is attached to clothes or the like, the retroreflective tape more easily follows the movement of the wearer, and an effective comfortable feeling can be given to the wearer.

The non-retroreflective region includes a plurality of linear regions extending in two or more different directions, and an intersection where the linear regions intersect with each other is formed. At this intersection, the corner of the retroreflective region formed by the linear portion is chamfered. By disposing the non-retroreflective region in this manner, the corner of the retroreflective region is chamfered at the intersection, so that an excellent design effect is provided. At the same time, when the retroreflective tape is attached to clothes or the like, the retroreflective tape more easily follows the movement of the wearer, and, in addition, the retroreflective tape of the present invention can be more hardly peeled off.

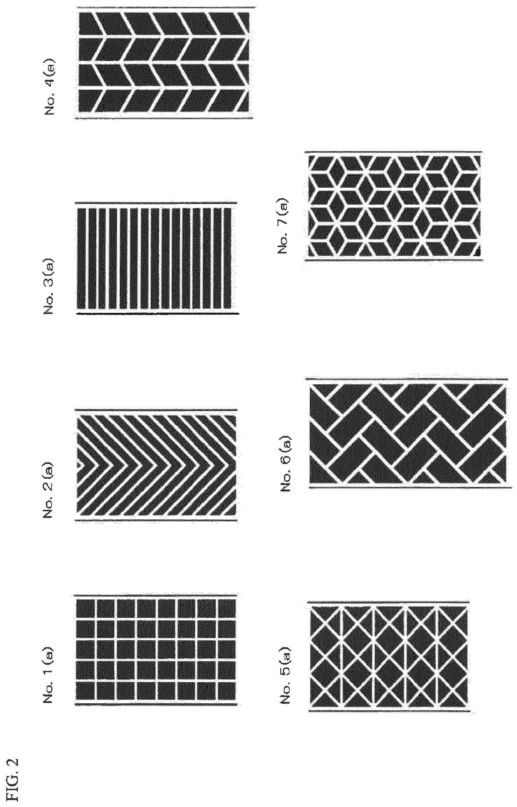

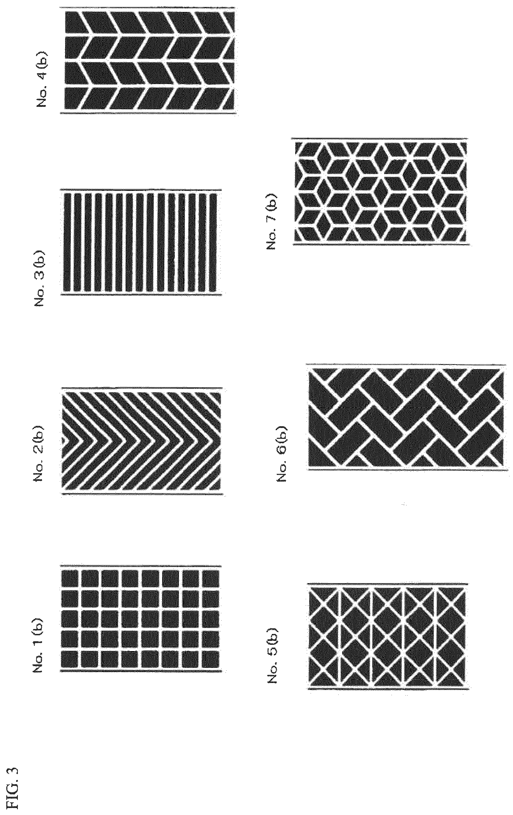

Figs. 2 and 3 show examples of patterns formed by the arrangement of retroreflective regions and non-retroreflective regions. In the examples of Figs. 2 and 3, a plurality of the non-retroreflective regions linearly provided are in communication in the longitudinal direction and/or width direction of the retroreflective tape. The plurality of retroreflective regions are independently partitioned, and a pattern design is formed by the arrangement of the retroreflective region and the non-retroreflective region.

Nos. 2(a), 4(a), 6(a), and 7(a) in Fig. 2 and Nos. 2(b), 4(b), 6(b), and 7(b) in Fig. 3 show an example in which the non-retroreflective region does not include a linear region extending parallel to the width direction of the retroreflective tape.

Nos. 1(a) and (b), Nos. 2(a) and (b), Nos. 4(a) and (b), Nos. 5(a) and (b), Nos. 6(a) and (b), and Nos. 7(a) and (b) in Figs. 2 and 3 show an example in which the non-retroreflective region includes a plurality of linear regions extending in two or more different directions. In Nos. 4(a) and (b), Nos. 5(a) and (b), and Nos. 7(a) and (b) in Figs. 2 and 3, the non-retroreflective region is formed with a plurality of linear regions extending in three different directions.

In Nos. 1(a), 2(a), 4(a), 5(a), 6(a) and 7(a) in Figs. 2 and 3, the non-retroreflective region is formed with a plurality of linear regions extending in two or more different directions, and the linear regions intersect with each other to form intersection portions. In Nos. 1(b), 2(b), 4(b), 5(b), 6(b) and 7(b) in Figs. 2 and 3, the non-retroreflective region is formed with a plurality of linear regions extending in two or more different directions, and the linear regions intersect with each other to form an intersection portion. At the intersection, the corner of the retroreflective region formed by the linear portion is chamfered.

Area Ratio of Retroreflective Region and Non-Retroreflective Region

In the retroreflective tape of the present invention, although the area ratio of the retroreflective region and the non-retroreflective region (the area of the retroreflective region/the area of the non-retroreflective region) is not particularly limited, the area ratio is, for example, 70/30 to 95/5. From the viewpoint of more effectively achieving both flexibility and retroreflective performance, the area ratio of the retroreflective region and the non-retroreflective region (the area of the retroreflective region/the area of the non-retroreflective region) is preferably 80/20 to 90/10, for example.

Adhesive Layer

In the adhesive layer, the retroreflective tape of the present invention may optionally be provided with an adhesive layer on a surface opposite to the side on which light is incident, in order to provide adhesiveness to an adherend. In the retroreflective tape of the present invention, when the support base is not provided, the adhesive layer may be provided on a surface of the fixing resin layer on the side not facing the reflective layer, and when the support base is provided, the adhesive layer may be provided on a surface of the support base on the side not facing the fixing resin layer.

While the type of the resin forming the adhesive layer is not limited as long as it can impart adhesiveness to the adherend, examples of the resin include a hot melt adhesive such as polyester urethane resin.

While the thickness of the adhesive layer is not limited, it is about 20 to 200 $\mu$m, for example, and preferably 30 to 100 $\mu$m.

Performance and Uses

The retroreflective tape of the present invention has excellent retroreflective performance. The retroreflective performance of the retroreflective tape of the present invention may specifically be such that the retroreflective performance under the condition that the incident angle of light from a light source is 5° and an observation angle is 0.2° is 100 cd/lx/m$^2$ or more, preferably 150 cd/lx/m$^2$ or more, more preferably 180~500 cd/lx/m$^2$, and particularly preferably 330~500 cd/lx/m$^2$. As used herein, the retroreflective performance (cd/lx/m$^2$) under the condition that the incident angle of the light from the light source is 5° and the observation angle is 0.2° refers to a value measured at an incident angle of 5° and an observation angle of 0.2°, in accordance with the method defined in JIS Z9117 (2010). In the retroreflective tape of the present invention, in order to further improve the retroreflective performance, in addition to setting the exposure ratio of the transparent microspheres to 53 to 70%, for example, the refractive index of the transparent microspheres, the material, the average particle size, the number of transparent microspheres embedded per unit area, the thickness and material of the reflective layer, the area ratio of the retroreflective region and the non-retroreflective region, and the pattern of the retroreflective region and the non-retroreflective region may be adjusted as appropriate.

The retroreflective tape of the present invention can be used by being attached to or sewn on an adherend used in various purposes such as safety clothing, apparel, bags, suitcases, shoes, road markings, retroreflective photoelectric sensors, and touch panels (for example, infrared retroreflective detection-type touch panels).

Further, the retroreflective tape of the present invention can be continuously rewound and made into a retroreflective tape roll product.

Production Method

While the method for producing the retroreflective tape of the present invention is not limited as long as it can produce the retroreflective tape having the above-described configurations, the method may, for example, include the following steps 1 to 9:

step 1: heating a release base in which a thermoplastic film is stacked on a base film at a temperature not less than the softening point of the thermoplastic film to soften the thermoplastic film;
step 2: prior to, simultaneously with, or subsequent to step 1, dispersing transparent microspheres over the thermoplastic film of the release base, and cooling the resulting material to cure the thermoplastic film at the time when 53 to 70% of the diameter of the transparent microspheres has been embedded in the softened thermoplastic film, to obtain a release base in which the transparent microspheres are embedded;
step 3: optionally forming a transparent resin layer by applying a resin forming the transparent resin layer to a surface with the transparent microspheres of the release base in which the transparent microspheres are embedded;
step 4: stacking a reflective layer formed of a metal film on the surface with the transparent microspheres of the release base in which the transparent microspheres are embedded, or on the transparent resin layer;
step 5: stacking a fixing resin layer on the reflective layer by applying a resin forming the fixing resin layer;
step 6: optionally bonding the fixing resin layer with a support base;
step 7: cutting along a region where a non-retroreflective region is to be formed from the fixing resin layer side to an interface on the side where the transparent microspheres of the thermoplastic film are embedded, peeling off, and exposing the thermoplastic film in this region;
step 8: optionally peeling off the release base; and
step 9: optionally rewinding the resultant retroreflective tape.

In the second step, the transparent microspheres are embedded in the thermoplastic film because the transparent microspheres placed on the thermoplastic film in a softened state are allowed to gravity settle. Thus, the size and density of the transparent microspheres, as well as the density and the thickness of the thermoplastic film, for example, are to be considered in the first step, and then in the second step, the degree of softening of the thermoplastic film may be controlled such that 53 to 70% of the diameter of the transparent microspheres is embedded in the thermoplastic film, by appropriately adjusting the heating temperature and time for softening.

For example, where transparent glass beads having a refractive index of 1.9 to 2.1 and an average particle size of 50 to 100 $\mu$m are used as the transparent microspheres, a polyester film is used as the base film constituting the release base, and a polyethylene film is used as the thermoplastic film constituting the release base, the thermoplastic film may be softened by heating in the first step, with the heating temperature adjusted in the range of temperatures preferably from 150°C to 230°C, and more preferably 180°C to 220°C, and the heating time adjusted in the range of 2 to 3 minutes. This facilitates embedding 53 to 70% of the diameter of the transparent microspheres into the thermoplastic film in the second step. In this case, if heat treatment is performed, for example, at a temperature of 150°C or lower for 2 to 3 minutes in the first step, the embedding ratio of the transparent microspheres into the thermoplastic film tends to be less than 53%. In particular, where transparent glass beads having a refractive index of 1.9 to 2.1 and an average particle size of 75 to 90 $\mu$m are used as the transparent microspheres, a polyester film is used as the base film constituting the release base, and a polyethylene film is used as the thermoplastic film constituting the release base, the thermoplastic film may be softened by heating in the first step, with the heating temperature adjusted in the range of temperatures preferably from 190°C to 220°C, and the heating time adjusted in the range of 2 to 3 minutes.

Where transparent glass beads with a refractive index of 1.9 to 2.1 and an average particle size of 50 to 100 $\mu$m are used as the transparent microspheres, and a low density polyethylene film is used as the thermoplastic film constituting the release base, heating may be performed in the first step at a temperature of 150°C to 230°C, and preferably 180°C to 220°C. This facilitates gravity settling of the transparent microspheres in a short period of time in the second step, compared to the case where a polyethylene film with a density higher than that of the low density polyethylene is used. This is likely to be advantageous in continuous operation, for example. Further, in this case, the thickness of the low density polyethylene film may be adjusted such that the embedding ratio of the transparent microspheres is 53 to 70%, by sinking the transparent microspheres down to the polyester film interface. This facilitates achieving a uniform embedding ratio of the respective transparent microspheres.

The third and fourth steps are performed subsequent to the second step, after the thermoplastic film is returned to the cured state by being cooled or allowed to cool.

The third step is performed when the transparent resin layer is provided between the transparent microspheres and the reflective layer. The resin forming the transparent resin layer may be applied to the surface with the transparent microspheres, using a known resin coating method.

In the fourth step, the reflective layer formed of a metal film may be formed using a known metal film formation method such as vapor deposition, sputtering, chemical vapor deposition, or plating. Vapor deposition may be preferred as the method of forming the reflective layer.

In the fifth step, the resin forming the fixing resin layer may be applied onto the reflective layer, using a known resin coating method.

In the sixth step, the method of bonding the fixing resin layer with the support base is not limited, and may be a known lamination method.

In the seventh step, as a means for cutting, for example, a plotter cutter or the like can be used.

Examples

Hereinafter, the present invention will be described in detail with reference to examples and comparative examples. However, the present invention is not limited to the examples.

It should be noted that the average particle size of the transparent glass beads used in the following test examples represents a value obtained by measuring the maximum diameter of each transparent microsphere for 30 transparent microspheres, using a microscope (trade name: Digital Microscope VHX-1000; Keyence Corporation) set at 500 times magnification, and by calculating an average of the obtained values. Moreover, in the following test examples, the exposure ratio of the transparent glass beads represents a value obtained in accordance with the equation shown above, by observing 30 or more transparent microspheres embedded in the retroreflective material under a microscope (trade name: Digital Microscope VHX-1000; Keyence Corporation), and measuring the heights of the transparent glass beads exposed in the air.

Test Example 1

1. Production of Retroreflective Tape

Example 1

A laminate (width: 50 mm, length: 50 m) obtained by stacking a 40-$\mu$m-thick polyethylene film on a 75-$\mu$m-thick polyester film was used as a release base, and the laminate was heated at 200°C for 2 minutes to melt the polyethylene film. In this state, transparent glass beads with an average particle size of 79 $\mu$m and a refractive index of 1.93 as transparent microspheres were dispersed in an amount of 150 to 180 transparent glass beads/mm$^2$ over substantially one surface, and the resulting material was allowed to cool to cure the polyethylene film. Next, aluminum was deposited by the vapor deposition method on the surface with the transparent glass beads of the release base, thus forming a 700-Å-thick reflective layer. Further, polyethylene terephthalate (hereinafter sometimes abbreviated as PET) was applied onto the reflective layer, thus forming a fixing resin layer. Thereafter, a hot melt adhesive (polyester urethane resin) used as a support base was coated, dried and cured on the fixing resin layer to produce an intermediate tape having only the retroreflective region.

Then, the resultant intermediate tape was cut from the support base side to the interface on the side where the transparent glass beads of the polyethylene film were embedded by a plotter cutter while a design value of the area ratio of the retroreflective region and the non-retroreflective region (the area of the retroreflective region/the area of the non-retroreflective region) was set to 80/20 so that the arrangement shown in No. 6(b) in Fig. 2 (the width of the linear portion being 1 mm) was formed, and the support base, the fixing resin layer, the reflective layer, and the transparent glass beads in a region forming the non-retroreflective region were integrally peeled off to obtain a retroreflective tape in which the retroreflective region and the non-retroreflective region were provided. In the resultant retroreflective tape, the exposure ratio of the transparent glass beads in the retroreflective region was 54%.

Example 2

A retroreflective tape was produced under the same conditions as those in Example 1, except that the polyethylene film was heated at 190°C for 3 minutes. In the resultant retroreflective tape, the exposure ratio of the transparent glass beads in the retroreflective region was 56%.

Example 3

A retroreflective tape was produced under the same conditions as those in Example 1, except that the polyethylene film was heated at 200°C for 3 minutes. In the resultant retroreflective tape, the exposure ratio of the transparent glass beads in the retroreflective region was 57%.

Example 4

A retroreflective tape was produced under the same conditions as those in Example 1, except that the polyethylene film was heated at 210°C for 3 minutes. In the resultant retroreflective tape, the exposure ratio of the transparent glass beads in the retroreflective region was 64%.

Example 5

A retroreflective tape was produced under the same conditions as those in Example 1, except that the polyethylene film was heated at 220°C for 3 minutes. In the resultant retroreflective tape, the exposure ratio of the transparent glass beads in the retroreflective region was 66%.

Comparative Example 1

A retroreflective tape was produced under the same conditions as those in Example 1, except that the polyethylene film was heated at 160°C for 3 minutes. In the resultant retroreflective tape, the exposure ratio of the transparent glass beads in the retroreflective region was 31%.

Comparative Example 2

A retroreflective tape was produced under the same conditions as those in Example 1, except that the polyethylene film was heated at 180°C for 3 minutes. In the resultant retroreflective tape, the exposure ratio of the transparent glass beads in the retroreflective region was 45%.

Comparative Example 3

A retroreflective tape was produced under the same conditions as those in Example 1, except that the polyethylene film was heated at 220°C for 6 minutes. In the resultant retroreflective tape, the exposure ratio of the transparent glass beads in the retroreflective region was 80%.

Comparative Example 4

A 40-$\mu$m-thick polyethylene film laminated on a 75-$\mu$m-thick polyester film was used as a release base, and this laminate was heated at 200°C for 2 minutes to melt the polyethylene film. In this state, transparent glass beads with an average particle size of 79 $\mu$m and a refractive index of 1.93 as transparent microspheres were dispersed in an amount of 150 to 180 transparent glass beads/mm$^2$ over substantially one surface, and the resulting material was allowed to cool to cure the polyethylene film. Next, aluminum was deposited by the vapor deposition method on the surface with the transparent glass beads of the release base, thus forming a 700-Å-thick reflective layer. Further, polyethylene terephthalate (hereinafter sometimes abbreviated as PET) was applied onto the reflective layer, thus forming a fixing resin layer. Thereafter, a hot melt adhesive (polyester urethane resin) used as a support was coated, dried and cured on the fixing resin layer to produce an intermediate sheet having only the retroreflective region.

Then, the resultant intermediate sheet was just formed into a tape shape without providing a non-retroreflective region, and a retroreflective tape was produced (that is, the design value of the area ratio of the retroreflective region and the non-retroreflective region (the area of the retroreflective region/the area of the non-retroreflective region) was 100/0). In the resultant retroreflective tape, the exposure ratio of the transparent glass beads was 54%.

2. Evaluation of Retroreflective Tape

(1) Retroreflective performance before washing (cd/lx/m$^2$)

The retroreflective performance before washing was measured at an incident angle of 5° and an observation angle of 0.2° in accordance with a method defined in JIS Z9117 (2010).

(2) Flexibility

The resultant retroreflective tape was attached to a shoulder portion of the same thin clothes by the same procedure, the clothes were worn by five panelists, and sensory evaluation was performed on the comfort of wearing when they move their shoulder joints. Clothes with no retroreflective tape were used as a blank, and the wearing comfort based on the blank was evaluated according to the following criteria. Grade 3 and higher grades were determined as being acceptable.

Grade 5: Even if the shoulder was turned in any direction, flexibility was felt, and the wearing comfort was particularly excellent.
Grade 4: When the shoulder was turned in multiple directions, there was a direction in which some resistance was observed; however, flexibility was provided, and the wearing comfort was excellent.
Grade 3: When the shoulder was turned in multiple directions, there was a direction in which resistance was observed; however, substantial flexibility was provided, and there was no problem with the wearing comfort.
Grade 2: When the shoulder was turned in multiple directions, there were many directions in which resistance was observed, and there was a slight problem with the wearing comfort.
Grade 1: Even if the shoulder was turned in any direction, resistance was observed, and there was a problem with the wearing comfort.

(3) Clarity of Boundary Between Retroreflective Region and Non-Retroreflective Region

The boundary between the retroreflective region and the non-retroreflective region of the resultant tape was visually evaluated by five panelists according to the following criteria. Grade 3 and higher grades were determined as being acceptable.

Grade 5: In a straight line of a boundary separating the retroreflective region and the non-retroreflective region, peeling of a portion of the retroreflective region which should be originally maintained was not observed at all, and the straight line was particularly clear without chipping.
Grade 4: In the straight line of the boundary separating the retroreflective region and the non-retroreflective region, although slight peeling of a portion of the retroreflective region which should be originally maintained was observed, the straight line was clear with almost no chipping.
Grade 3: In the straight line of the boundary separating the retroreflective region and the non-retroreflective region, peeling of a portion of the retroreflective region which should be originally maintained was somewhat observed, but was on a satisfactory level as appearance.
Grade 2: In the straight line of the boundary separating the retroreflective region and the non-retroreflective region, much peeling of a portion of the retroreflective region which should be originally maintained was observed, and the straight line was significantly chipped and was slightly problematic in appearance.
Grade 1: In the straight line of the boundary separating the retroreflective region and the non-retroreflective region, a lot of peeling of a portion of the retroreflective region which should be originally maintained was observed, and the straight line was considerably chipped and was problematic in appearance.

(4) Washing Durability

After the resultant tape was repeatedly washed 50 times by the ISO 6330 2A method, the retroreflective performance ($cd/lx/m^2$) was measured by the method described in the above (1), and a ratio of the retroreflective performance after washing to the retroreflective performance before washing was calculated as the washing durability (%). 25% or more were determined as being acceptable.

The obtained results are shown in Table 1. From these results, it is found that in the retroreflective tape, by embedding the transparent microspheres in the fixing resin layer such that the exposure ratio of the transparent microspheres is in the range of 53 to 70%, while excellent flexibility, retroreflective performance, and washing durability are provided, the boundary between the retroreflective region and the non-retroreflective region can be clearly formed.

[Table 1]

| | Example 1 | Example 2 | Example 3 | Example 4 | Example 5 | Comparative Example 1 | Comparative Example 2 | Comparative Example 3 | Comparative Example 4 |
|---|---|---|---|---|---|---|---|---|---|
| Exposure ratio (%) of transparent glass beads | 54 | 56 | 57 | 64 | 66 | 31 | 45 | 80 | 54 |
| Pattern of retroreflective region and non-retroreflective region | No. 6 (b) | No. 6 (b) | No. 6 (b) | No. 6 (b) | No. 6 (b) | No. 6(b) | No. 6 (b) | No. 6(b) | The entire retroreflective region |
| Design value of area of retroreflective region/ area of non-retroreflective region | 86.2 | 86.2 | 86.2 | 86.2 | 86.2 | 86.2 | 86.2 | 86.2 | 100 |
| Clarity of boundary between retroreflective region and non-retroreflective region | 4 | 4 | 4 | 5 | 5 | 1 | 1 | 5 | - |
| Retroreflective performance before washing (cd/lx/m$^2$) | 411 | 415 | 410 | 412 | 411 | 422 | 417 | 396 | 503 |
| Flexibility | 5 | 5 | 5 | 5 | 5 | 5 | 5 | 5 | 1 |
| Retroreflective performance after 50 times washing (cd/lx/m$^2$) | 200 | 182 | 175 | 133 | 126 | 195 | 185 | 22 | 250 |
| Washing durability (%) | 48.7 | 43.9 | 42.7 | 32.3 | 30.7 | 46.2 | 44.4 | 5.6 | 49.7 |

Test Example 2

1. Production of Retroreflective Tape

Example 6

A retroreflective tape was produced under the same conditions as those in Example 1, except that transparent glass beads with an average particle size of 65 $\mu$m and a refractive index of 1.93 were used, and the polyethylene film was heated at 180°C for 3 minutes. In the resultant retroreflective tape, the exposure ratio of the transparent glass beads in the retroreflective region was 59%.

Example 7

A retroreflective tape was produced under the same conditions as those in Example 6, except that the polyethylene film was heated at 190°C for 3 minutes. In the resultant retroreflective tape, the exposure ratio of the transparent glass beads in the retroreflective region was 66%.

Example 8

A retroreflective material was produced under the same conditions as those in Example 6, except that the polyethylene film was heated at 210°C for 3 minutes. In the resultant retroreflective tape, the exposure ratio of the transparent glass beads in the retroreflective region was 69%.

Comparative Example 5

A retroreflective material was produced under the same conditions as those in Example 6, except that the polyethylene film was heated at 220°C for 6 minutes. In the resultant retroreflective tape, the exposure ratio of the transparent glass beads in the retroreflective region was 75%.

2. Evaluation of Retroreflective Performance of Retroreflective Material

The performance of each retroreflective material was evaluated in the same manner as in Test Example 1.
The obtained results are shown in Table 2. From these results, it is found that by setting the exposure ratio of the transparent microspheres in the range of 53 to 70% in the retroreflective tape, excellent flexibility, retroreflective performance, washing durability, and the clarity of the boundary between the retroreflective region and the non-retroreflective region can be achieved simultaneously.

[Table 2]

|  | Example 6 | Example 7 | Example 8 | Comparative Example 5 |
|---|---|---|---|---|
| Exposure ratio (%) of transparent glass beads | 59 | 66 | 69 | 75 |
| Pattern of retroreflective region and non-retroreflective region | No. 6(b) | No. 6(b) | No. 6(b) | No. 6(b) |
| Design value of area of retroreflective region/ area of non-retroreflective region | 80.2 | 80.2 | 80.2 | 80.2 |
| Clarity of boundary between retroreflective region and non-retroreflective region | 4 | 5 | 5 | 5 |
| Retroreflective performance before washing (cd/lx/m$^2$) | 329 | 328 | 319 | 301 |
| Flexibility | 5 | 5 | 5 | 5 |
| Retroreflective performance after 50 times washing (cd/lx/m$^2$) | 106 | 101 | 103 | 39 |
| Washing durability (%) | 32.2 | 30.8 | 32.3 | 13.0 |

Test Example 3

1. Production of Retroreflective Tape

Example 9

A retroreflective tape was produced under the same conditions as those in Example 3, except that cutting was performed from the support side to the interface on the side where the transparent glass beads of the polyethylene film were embedded by a plotter cutter while a design value of the area ratio of the retroreflective region and the non-retroreflective region (the area of the retroreflective region/the area of the non-retroreflective region) was set to 80/20 so that the arrangement shown in No. 1(a) in Fig. 2 (the width of the linear portion being 1 mm) was formed. In the resultant retroreflective tape, the exposure ratio of the transparent glass beads in the retroreflective region was 57%.

Example 10

A retroreflective tape was produced under the same conditions as those in Example 3, except that cutting was performed from the support side to the interface on the side where the transparent glass beads of the polyethylene film were embedded by a plotter cutter while a design value of the area ratio of the retroreflective region and the non-retroreflective region (the area of the retroreflective region/the area of the non-retroreflective region) was set to 80/20 so that the arrangement shown in No. 2(a) in Fig. 2 (the width of the linear portion being 1 mm) was formed. In the resultant retroreflective tape, the exposure ratio of the transparent glass beads in the retroreflective region was 57%.

Example 11

A retroreflective tape was produced under the same conditions as those in Example 3, except that cutting was performed from the support side to the interface on the side where the transparent glass beads of the polyethylene film were embedded by a plotter cutter while a design value of the area ratio of the retroreflective region and the non-retroreflective region (the area of the retroreflective region/the area of the non-retroreflective region) was set to 80/20 so that the arrangement shown in No. 3(a) in Fig. 2 (the width of the linear portion being 1 mm) was formed. In the resultant retroreflective tape, the exposure ratio of the transparent glass beads in the retroreflective region was 57%.

Example 12

A retroreflective tape was produced under the same conditions as those in Example 3, except that cutting was performed from the support side to the interface on the side where the transparent glass beads of the polyethylene film were embedded by a plotter cutter while a design value of the area ratio of the retroreflective region and the non-retroreflective region (the area of the retroreflective region/the area of the non-retroreflective region) was set to 80/20 so that the arrangement shown in No. 4(a) in Fig. 2 (the width of the linear portion being 1 mm) was formed. In the resultant retroreflective tape, the exposure ratio of the transparent glass beads in the retroreflective region was 57%.

Example 13

A retroreflective tape was produced under the same conditions as those in Example 3, except that cutting was performed from the support side to the interface on the side where the transparent glass beads of the polyethylene film were embedded by a plotter cutter while a design value of the area ratio of the retroreflective region and the non-retroreflective region (the area of the retroreflective region/the area of the non-retroreflective region) was set to 80/20 so that the arrangement shown in No. 5(a) in Fig. 2 (the width of the linear portion being 1 mm) was formed. In the resultant retroreflective tape, the exposure ratio of the transparent glass beads in the retroreflective region was 57%.

Example 14

A retroreflective tape was produced under the same conditions as those in Example 3, except that cutting was performed from the support side to the interface on the side where the transparent glass beads of the polyethylene film were embedded by a plotter cutter while a design value of the area ratio of the retroreflective region and the non-retroreflective region (the area of the retroreflective region/the area of the non-retroreflective region) was set to 80/20 so that the arrangement shown in No. 1(b) in Fig. 3 (the width of the linear portion being 1 mm) was formed. In the resultant retroreflective tape, the exposure ratio of the transparent glass beads in the retroreflective region was 57%.

Example 15

A retroreflective tape was produced under the same conditions as those in Example 3, except that cutting was performed from the support side to the interface on the side where the transparent glass beads of the polyethylene film were embedded by a plotter cutter while a design value of the area ratio of the retroreflective region and the non-retroreflective region (the area of the retroreflective region/the area of the non-retroreflective region) was set to 80/20 so that the arrangement shown in No. 2(b) in Fig. 3 (the width of the linear portion being 1 mm) was formed. In the resultant retroreflective tape, the exposure ratio of the transparent glass beads in the retroreflective region was 57%.

Example 16

A retroreflective tape was produced under the same conditions as those in Example 3, except that cutting was performed from the support side to the interface on the side where the transparent glass beads of the polyethylene film were embedded by a plotter cutter while a design value of the area ratio of the retroreflective region and the non-retroreflective region (the area of the retroreflective region/the area of the non-retroreflective region) was set to 80/20 so that the arrangement shown in No. 3(b) in Fig. 3 (the width of the linear portion being 1 mm) was formed. In the resultant retroreflective tape, the exposure ratio of the transparent glass beads in the retroreflective region was 57%.

Example 17

A retroreflective tape was produced under the same conditions as those in Example 3, except that cutting was performed from the support side to the interface on the side where the transparent glass beads of the polyethylene film were embedded by a plotter cutter while a design value of the area ratio of the retroreflective region and the non-retroreflective region (the area of the retroreflective region/the area of the non-retroreflective region) was set to 80/20 so that the arrangement shown in No. 4(b) in Fig. 3 (the width of the linear portion being 1 mm) was formed. In the resultant retroreflective tape, the exposure ratio of the transparent glass beads in the retroreflective region was 57%.

Example 18

A retroreflective tape was produced under the same conditions as those in Example 3, except that cutting was performed from the support side to the interface on the side where the transparent glass beads of the polyethylene film were embedded by a plotter cutter while a design value of the area ratio of the retroreflective region and the non-retroreflective region (the area of the retroreflective region/the area of the non-retroreflective region) was set to 80/20 so that the arrangement shown in No. 5(b) in Fig. 3 (the width of the linear portion being 1 mm) was formed. In the resultant retroreflective tape, the exposure ratio of the transparent glass beads in the retroreflective region was 57%.

2. Evaluation of Retroreflective Performance of Retroreflective Material

The performance of each retroreflective material was evaluated in the same manner as in Test Example 1.
The obtained results are shown in Table 3. From these results, it is found that even if the arrangement pattern of the retroreflective region and the non-retroreflective region is changed, by setting the exposure ratio of the transparent microspheres in the range of 53 to 70%, excellent flexibility, retroreflective performance, washing durability, and the clarity of the boundary between the retroreflective region and the non-retroreflective region can be achieved simultaneously.

[Table 3]

| | Example 9 | Example 10 | Example 11 | Example 12 | Example 13 | Example 14 | Example 15 | Example 16 | Example 17 | Example 18 |
|---|---|---|---|---|---|---|---|---|---|---|
| Exposure ratio (%) of transparent glass beads | 57 | 57 | 57 | 57 | 57 | 57 | 57 | 57 | 57 | 57 |
| Pattern of retroreflective region and non-retroreflective region | No. 1 (a) | No. 2 (a) | No. 3 (a) | No. 4 (a) | No. 5 (a) | No. 1 (b) | No. 2 (b) | No. 3 (b) | No. 4 (b) | No. 5 (b) |
| Design value of area of retroreflective region/area of non-retroreflective region | 78.3 | 75.7 | 74.5 | 80.6 | 75.4 | 77.5 | 75.6 | 74 | 80.2 | 74.8 |
| Clarity of boundary between retroreflective region and non-retroreflective region | 3 | 4 | 3 | 4 | 3 | 4 | 5 | 4 | 5 | 4 |
| Retroreflective performance before washing (cd/lx/m$^2$) | 385 | 380 | 377 | 415 | 376 | 377 | 370 | 371 | 395 | 364 |
| Flexibility | 5 | 3 | 3 | 5 | 5 | 5 | 3 | 3 | 5 | 5 |
| Retroreflective performance after 50 times washing (cd/lx/m$^2$) | 115 | 117 | 113 | 120 | 113 | 116 | 113 | 109 | 122 | 111 |
| Rate (%) of transparent microspheres falling off when tape is used by being attached to cloth, etc. | 29.9 | 30.8 | 30.0 | 28.9 | 30.1 | 30.8 | 30.5 | 29.4 | 30.9 | 30.5 |

EP 3 480 631 B1

18

EP 3 480 631 B1

DESCRIPTION OF REFERENCE SIGNS

1: Base Layer
11: Support base
12: Release base
2: Retroreflective Region
21: Fixing resin layer
22: Reflective layer
23: Transparent microspheres
24: Transparent resin layer
3: Non-Retroreflective Region
4: Adhesive Layer

**Claims**

1. A retroreflective tape comprising a retroreflective region partially provided on a base layer, wherein the retroreflective region is a region having

   a fixing resin layer,
   a transparent microsphere embedded in the fixing resin layer, and
   a reflective layer formed of a metal film provided between the transparent microsphere and the fixing resin layer,
   the transparent microsphere has a refractive index of 1.6 to 2.5, and
   the transparent microsphere is embedded in the fixing resin layer with an exposure ratio of 53 to 70%,
   wherein an adhesive layer is provided on a surface of the fixing resin layer on the side not facing the reflective layer,
   wherein the retroreflective tape has a non-retroreflective region (3) corresponding to a region where the retroreflective region (2) is not provided,
   wherein the non-retroreflective region is a void portion with no other constituents than the base layer,
   wherein the non-retroreflective region (3) without the retroreflective region (2) is in communication in a longitudinal direction and/or a width direction of the retroreflective tape, and the retroreflective region is partitioned into a plurality of regions by the non-retroreflective region to form a design pattern,
   wherein the non-retroreflective region (3) without the retroreflective region (2) does not form a linear region extending parallel to the width direction of the retroreflective tape,
   wherein the non-retroreflective region (3) without the retroreflective region (2) forms a plurality of linear regions extending in two or more different directions,
   wherein the plurality of linear regions extending in the two or more different directions intersect with each other to form an intersection, and
   wherein a corner of the retroreflective region (2) formed by the linear region is chamfered at the intersection.

2. The retroreflective tape according to claim 1, wherein the base layer is a support base provided on the side of the fixing resin layer where the transparent microsphere is not embedded, and an incident light side of the transparent microsphere is exposed on a surface.

3. The retroreflective tape according to claim 1, wherein the base layer is a releasable release base comprising a laminate comprising a thermoplastic film stacked on a base film, and the thermoplastic film embeds a region of the transparent microsphere exposed from the fixing resin layer.

4. Use of the retroreflective tape according to any one of claims 1 to 3 as a member to be attached to or sewn on an adherend.

5. Use of the retroreflective tape according to any one of claims 1 to 3 as a member to be attached to clothing.

19

**Patentansprüche**

1. Retroreflektierendes Band, umfassend einen retroreflektierenden Bereich, der teilweise auf einer Basisschicht bereitgestellt ist, wobei der retroreflektierende Bereich ein Bereich mit

   einer fixierenden Harzschicht,
   einer transparenten Mikrokugel, die in die fixierende Harzschicht eingebettet ist, und
   einer reflektierenden Schicht ist, die aus einem Metallfilm gebildet ist, der zwischen der transparenten Mikrokugel und der fixierenden Harzschicht bereitgestellt ist,
   wobei die transparente Mikrokugel einen Brechungsindex von 1,6 bis 2,5 aufweist und
   die transparente Mikrokugel in die fixierende Harzschicht mit einem Expositionssverhältnis von 53 bis 70 % eingebettet ist,
   wobei eine Haftschicht auf einer Oberfläche der fixierenden Harzschicht auf der Seite bereitgestellt ist, die nicht der reflektierenden Schicht gegenüberliegt,
   wobei das retroreflektierende Band einen nicht retroreflektierenden Bereich (3) aufweist, der einem Bereich entspricht, in dem der retroreflektierende Bereich (2) nicht bereitgestellt ist,
   wobei der nicht-retroreflektierende Bereich ein Leerstellenabschnitt mit keinen anderen Bestandteilen als der Basisschicht ist,
   wobei der nicht-retroreflektierende Bereich (3) ohne den retroreflektierenden Bereich (2) in einer Längsrichtung und/oder einer Breitenrichtung des retroreflektierenden Bands in Verbindung steht, und der retroreflektierende Bereich durch den nicht-retroreflektierenden Bereich in eine Mehrzahl von Bereichen unterteilt ist, um ein Designmuster zu bilden,
   wobei der nicht-retroreflektierende Bereich (3) ohne den retroreflektierenden Bereich (2) keinen linearen Bereich bildet, der sich parallel zur Breitenrichtung des retroreflektierenden Bands erstreckt,
   wobei der nicht-reflektierende Bereich (3) ohne den retroreflektierenden Bereich (2) eine Mehrzahl von linearen Bereichen bildet, die sich in zwei oder mehr verschiedene Richtungen erstrecken,
   wobei sich die Mehrheit der linearen Bereiche, die sich in die zwei oder mehr verschiedenen Richtungen erstrecken, miteinander schneiden, um eine Überschneidung zu bilden und
   wobei eine Ecke des retroreflektierenden Bereichs (2), die durch den linearen Bereich gebildet wird, an der Überschneidung abgeschrägt ist.

2. Retroreflektierendes Band nach Anspruch 1, wobei die Basisschicht eine Trägerbasis ist, die auf der Seite der fixierenden Harzschicht bereitgestellt ist, an der die transparente Mikrokugel nicht eingebettet ist, und eine Lichteinfallsseite der transparenten Mikrokugel auf einer Oberfläche exponiert ist.

3. Retroreflektierendes Band nach Anspruch 1, wobei die Basisschicht eine trennbare Trennbasis ist, umfassend ein Laminat, das einen thermoplastischen Film umfasst, der auf einem Basisfilm gestapelt ist, und der thermoplastische Film einen Bereich der transparenten Mikrokugel einbettet, die von der fixierenden Harzschicht exponiert ist.

4. Verwendung des retroreflektierenden Bands nach einem der Ansprüche 1 bis 3 als ein an eine Verbindungsfläche zu befestigendes oder anzunähendes Element.

5. Verwendung des retroreflektierenden Bands nach einem der Ansprüche 1 bis 3 als ein an Kleidung zu befestigendes Element.

**Revendications**

1. Ruban rétroréfléchissant comprenant une région rétroréfléchissante prévue partiellement sur une couche de base, dans lequel la région rétroréfléchissante est une région ayant

   une couche de résine de fixation,
   une microsphère transparente incorporée dans la couche de résine de fixation, et une couche réfléchissante formée d'un film métallique prévu entre la microsphère transparente et la couche de résine de fixation,
   la microsphère transparente a un indice de réfraction de 1,6 à 2,5, et
   la microsphère transparente est incorporée dans la couche de résine de fixation avec un rapport d'exposition de 53 à 70 %,
   dans lequel une couche adhésive est prévue sur une surface de la couche de résine de fixation sur le côté qui n'est pas tourné vers la couche réfléchissante,

dans lequel le ruban rétroréfléchissant a une région non rétroréfléchissante (3) correspondant à une région où la région rétroréfléchissante (2) n'est pas prévue, dans lequel la région non rétroréfléchissante est une portion vide avec aucun autre constituant que la couche de base,

dans lequel la région non rétroréfléchissante (3) sans la région rétroréfléchissante (2) est en communication dans une direction longitudinale et/ou un sens de la largeur du ruban rétroréfléchissant, et la région rétroréfléchissante est divisée en une pluralité de régions par la région non rétroréfléchissante pour former un motif de conception,

dans lequel la région non rétroréfléchissante (3) sans la région rétroréfléchissante (2) ne forme pas de région linéaire s'étendant parallèlement au sens de la largeur du ruban rétroréfléchissant,

dans lequel la région non rétroréfléchissante (3) sans la région rétroréfléchissante (2) forme une pluralité de régions linéaires s'étendant dans deux directions différentes ou plus,

dans lequel la pluralité de régions linéaires s'étendant dans les deux directions différentes ou plus se coupent l'une l'autre pour former une intersection, et

dans lequel un coin de la région rétroréfléchissante (2) formé par la région linéaire est chanfreiné à l'intersection.

2. Ruban rétroréfléchissant selon la revendication 1, dans lequel la couche de base est une base de support prévue sur le côté de la couche de résine de fixation où la microsphère transparente n'est pas incorporée, et un côté de lumière incidente de la microsphère transparente est exposé sur une surface.

3. Ruban rétroréfléchissant selon la revendication 1, dans lequel la couche de base est une base de libération pouvant être libérée comprenant un stratifié comprenant un film thermoplastique empilé sur un film de base, et le film thermoplastique incorpore une région de la microsphère transparente exposée depuis la couche de résine de fixation.

4. Utilisation du ruban rétroréfléchissant selon l'une quelconque des revendications 1 à 3 en tant qu'élément devant être relié à ou cousu sur un adhéré.

5. Utilisation du ruban rétroréfléchissant selon l'une quelconque des revendications 1 à 3 en tant qu'élément devant être relié à de l'habillage.

FIG. 1

(a)

(b)

(c)

FIG. 2

No. 1 (a)   No. 2 (a)   No. 3 (a)   No. 4 (a)

No. 5 (a)   No. 6 (a)   No. 7 (a)

EP 3 480 631 B1

FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013014727 A
- JP 3093638 U
- JP 2015191144 A